# EUROPEAN PATENT APPLICATION

(11) **EP 4 564 121 A1**
(43) Date of publication of application: **04.06.2025**
(21) Application number: 23846120.6
(22) Date of filing: 30.06.2023
(51) Int. Cl.: G05D 3/12, H04L 7/00, G05B 19/414

(54) **CONTROL SYSTEM, COMMUNICATION DEVICE, AND CONTROL METHOD**

(30) Priority: 25.07.2022 JP 2022117830
(71) Applicant: OMRON Corporation, Kyoto 600-8530 (JP)
(72) Inventor: NISHIMURA, Tomohiro, Kyoto-shi, Kyoto 600-8530 (JP)
(74) Representative: Mewburn Ellis LLP
(86) International application number: PCT/JP2023/024338
(87) International publication number: WO 2024/024387

(57) **Abstract**

A control system includes a computing unit that executes an application program to calculate a first command value and a second command value, a signal output unit that outputs a control signal including the first command value in accordance with a control period signal that indicates a synchronization reference, a communication unit that transmits in accordance with the control period signal, a frame including the second command value in a communication scheme in which a clock signal is directly or indirectly used, a measurement unit that measures a time period that indicates timing of start of transmission of the frame, from the synchronization reference indicated by the control period signal, and an adjustment unit that adjusts a period length of at least a part of the clock signal based on the measured time period.

## Description

### TECHNICAL FIELD

The present invention relates to a control system, a communication apparatus, and a control method.

### BACKGROUND ART

In control of various devices, various fluctuations (jitter) may be a factor for an error. For example, Japanese Patent Laying-Open No. 2000-078875 (PTL 1) discloses a technique to reduce jitter originating from an error in accuracy of a phase detector in servo control using a phase locked loop.

Jitter may occur not only in a detection device such as a phase detector but also in communication between apparatuses. For example, Japanese Patent Laying-Open No. 2006-127514 (PTL 2) discloses a modular numerical control that can transmit synchronization information with low jitter.

### CITATION LIST

### PATENT LITERATURE

PTL 1: Japanese Patent Laying-Open No. 2000-078875
PTL 2: Japanese Patent Laying-Open No. 2006-127514

### SUMMARY OF INVENTION

### TECHNICAL PROBLEM

In a system in which a common control device controls a plurality of mechanisms, control of those mechanisms should be synchronized. The prior art documents described above do not consider such an issue.

One of objects of the present invention is to provide a technique to enhance control accuracy in a system in which a plurality of command values are outputted in different communication schemes.

### SOLUTION TO PROBLEM

A control system according to one example of the present invention includes a computing unit that executes an application program to calculate a first command value and a second command value, a signal output unit that outputs a control signal including the first command value in accordance with a control period signal that indicates a synchronization reference, a communication unit that transmits in accordance with the control period signal, a frame including the second command value in a communication scheme in which a clock signal is directly or indirectly used, a measurement unit that measures a time period that indicates timing of start of transmission of the frame, from the synchronization reference indicated by the control period signal, and an adjustment unit that adjusts a period length of at least a part of the clock signal based on the measured time period.

According to this configuration, in accordance with the control period signal, a frame including the second command value can be transmitted at any predetermined timing with respect to timing of output of the control signal including the first command value. Even if there is a difference between a response time period of an apparatus that operates in accordance with the first command value and a response time period of an apparatus that operates in accordance with the second command value, the apparatuses can be synchronized by adjustment of timing.

The measurement unit may measure the time period based on the control period signal and a synchronization signal alternating at every predetermined period of the clock signal. According to this configuration, it can appropriately adjust timing of start of transmission of the frame including the second command value.

The measurement unit may include a first detector that detects a pulse edge included in the control period signal and a second detector that detects a pulse edge included in the synchronization signal. According to this configuration, a time period that indicates the timing of start of transmission of the frame can be measured by detection of the pulse edge included in each of the control period signal and the synchronization signal.

The adjustment unit may determine the number of cycles for which the period length of the clock signal is to be adjusted such that the measured time period matches a predetermined reference time period. According to this configuration, control to adjust timing can be facilitated by using the number of cycles necessary for setting the measured time period to be equal to the predetermined reference time period.

The adjustment unit may determine a direction of adjustment of the period length of the clock signal, based on relation of magnitude between the measured time period and the reference time period. According to this configuration, the direction of adjustment of the period length of the clock signal can readily be determined.

**In** one cycle of the control period signal, an upper limit value of the number of cycles of the clock signal the period length of which is to be adjusted may be predetermined. According to this configuration, by restricting a length of time within which timing is adjusted in each cycle of the control period signal, possibility of some influence on communication of the frame can be avoided.

The frame may correspond to a predetermined number of cycles of the clock signal. According to this configuration, since the frame is composed of cycles of the clock signal in the predetermined number, timing of transmission of the frame can directly be controlled by adjusting the period length of the clock signal.

According to another example of the present invention, a communication apparatus connected to a computing unit that executes an application program to calculate a first command value and a second command value and a control unit that outputs a control signal including the first command value in accordance with a control period signal that indicates a synchronization reference is provided. The communication apparatus includes a communication unit that transmits in accordance with the control period signal, a frame including the second command value in a communication scheme in which a clock signal is directly or indirectly used, a measurement unit that measures a time period that indicates timing of start of transmission of the frame, from the synchronization reference indicated by the control period signal, and an adjustment unit that adjusts a period length of at least a part of the clock signal based on the measured time period.

A control method according to yet another example of the present invention includes executing an application program to calculate a first command value and a second command value, outputting a control signal including the first command value in accordance with a control period signal that indicates a synchronization reference, transmitting in accordance with the control period signal, a frame including the second command value in a communication scheme in which a clock signal is directly or indirectly used, measuring a time period that indicates timing of start of transmission of the frame, from the synchronization reference indicated by the control period signal, and adjusting a period length of at least a part of the clock signal based on the measured time period.

### ADVANTAGEOUS EFFECTS OF INVENTION

According to one aspect of the present invention, control accuracy can be enhanced in a system that outputs a plurality of command values in different transmission methods.

### BRIEF DESCRIPTION OF DRAWINGS

Fig. 1 is a schematic diagram showing an exemplary configuration of a control system according to the present embodiment.
Fig. 2 is a schematic diagram showing an exemplary main hardware configuration of the control system according to the present embodiment.
Fig. 3 is a schematic diagram showing an exemplary hardware configuration involved with transmission of a mirror control signal in the control system according to the present embodiment.
Fig. 4 is a time chart showing a specific example of the mirror control signal in the control system according to the present embodiment.
Fig. 5 is a schematic diagram for illustrating a problem that may arise in the related art of the present embodiment.
Fig. 6 is a diagram for illustrating processing for adjusting timing of output of the mirror control signal in the control system according to the present embodiment.
Fig. 7 is a schematic diagram showing a functional configuration in a laser control unit of the control system according to the present embodiment.
Fig. 8 is a flowchart showing a procedure of processing for adjusting timing of output of the mirror control signal in the control system according to the present embodiment.
Fig. 9 is a diagram for illustrating an exemplary operation for absorbing influence by jitter in the control system according to the present embodiment.
Fig. 10 is a diagram for illustrating an exemplary operation for absorbing influence by jitter in the control system according to the present embodiment.
Fig. 11 is a diagram for illustrating an exemplary operation at the time of adjustment of a setting time period in the control system according to the present embodiment.
Fig. 12 is a schematic diagram showing an exemplary user interface screen shown on an operation display device of the control system according to the present embodiment.
Fig. 13 is a schematic diagram showing another exemplary hardware configuration involved with transmission of the mirror control signal in the control system according to the present embodiment.
Fig. 14 is a diagram for illustrating a method of generating the mirror control signal shown in Fig. 13.

### DESCRIPTION OF EMBODIMENTS

An embodiment of the present invention will be described in detail with reference to the drawings. The same or corresponding elements in the drawings have the same reference characters allotted and description thereof will not be repeated.

### <A. Application>

An exemplary scene to which the present invention is applied will initially be described.

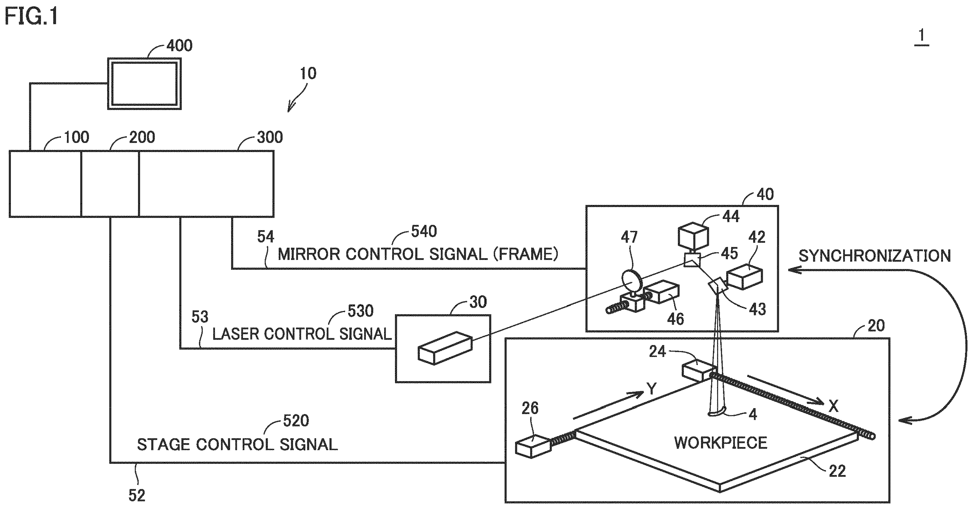

Fig. 1 is a schematic diagram showing an exemplary configuration of a control system 1 according to the present embodiment. Though Fig. 1 shows an example of a laser processing system as a typical example, an application to which the present invention is applied is not limited.

Control system 1 performs laser processing such as drilling, cutting, or marking on a workpiece 4 arranged on an XY stage 20. More specifically, control system 1 includes a control device 10, XY stage 20, laser 30, and a galvano mirror 40.

In laser processing onto workpiece 4, adjustment of a position of the workpiece by XY stage 20 and adjustment by galvano mirror 40, of a position of irradiation with laser beams generated by laser 30 are combined. Adjustment of the position of workpiece 4 by XY stage 20 is relatively large in amount of displacement and relatively long in response time period. In contrast, adjustment of the position of irradiation by galvano mirror 40 is relatively small in amount of displacement and relatively short in response time period.

Control device 10 includes a main control unit 100, a stage control unit 200, and a laser control unit 300.

An operation display device 400 configured to output a command to control device 10 and to output a result of computation in control device 10 in response to an operation by a user may be connected to control device 10.

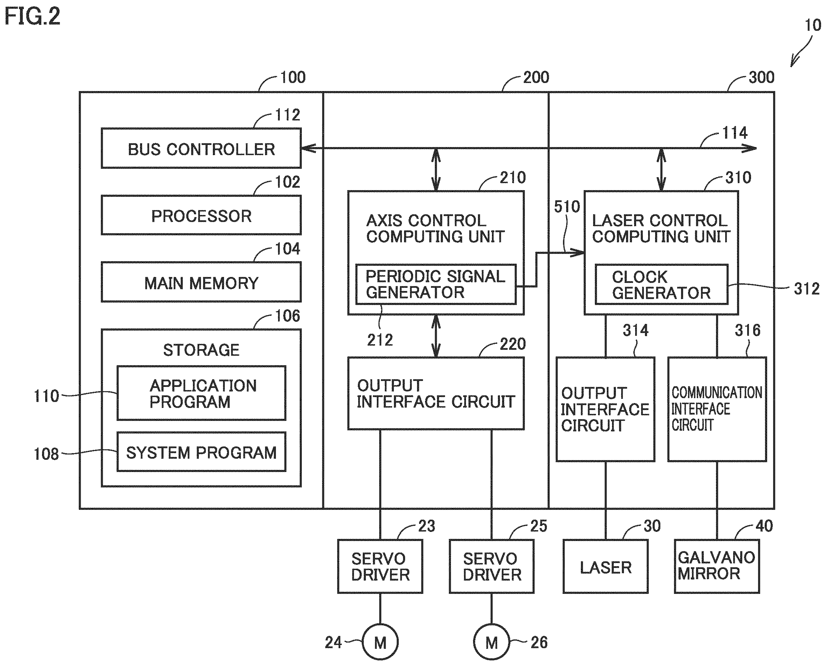

Main control unit 100 corresponds to a computing unit that executes an application program 110 (see Fig. 2). Application program 110 is freely created in accordance with a mechanism and workpiece 4 to be controlled. Main control unit 100 executes application program 110 to cyclically calculate a command value for each of XY stage 20, laser 30, and galvano mirror 40. A result of execution (command value) obtained by execution of application program 110 by main control unit 100 is outputted from stage control unit 200 and laser control unit 300.

Stage control unit 200 includes a signal output unit that outputs a stage control signal 520 (control signal) including a command value (first command value) for XY stage 20. More specifically, stage control unit 200 is connected to XY stage 20 through a control line 52 and outputs stage control signal 520 for driving XY stage 20.

XY stage 20 includes a plate 22 where workpiece 4 is arranged and a servo motor 24 and a servo motor 26 configured to drive plate 22. In the example shown in Fig. 1, servo motor 24 displaces plate 22 in an X-axis direction and servo motor 26 displaces plate 22 in a Y-axis direction.

Stage control signal 520 from stage control unit 200 is provided to a servo driver 23 and a servo driver 25 (see Fig. 2) that drive servo motor 24 and servo motor 26, respectively.

Laser control unit 300 is an exemplary communication apparatus, and it is connected to laser 30 through a control line 53 and outputs a laser control signal 530 indicating on and off to laser 30.

Laser control unit 300 includes a communication unit that transmits a mirror control signal 540 (frame) including a command value (second command value) for galvano mirror 40 in any communication scheme in which a clock signal is directly or indirectly used. More specifically, laser control unit 300 is connected to galvano mirror 40 through a communication line 54 and outputs mirror control signal 540 indicating a position of irradiation by galvano mirror 40.

Galvano mirror 40 includes an X-axis scanner mirror 43, a Y-axis scanner mirror 45, and a lens 47. Light emitted from laser 30 sequentially propagates through lens 47, Y-axis scanner mirror 45, and X-axis scanner mirror 43, and is projected on XY stage 20.

An X-axis scanner motor 42 adjusts an angle of a reflection surface of X-axis scanner mirror 43, and a Y-axis scanner motor 44 adjusts an angle of a reflection surface of Y-axis scanner mirror 45. A Z-axis scanner motor 46 adjusts a distance of lens 47 relative to laser 30.

Stage control signal 520 and laser control signal 530 are electrical signals. XY stage 20 and laser 30 operate in accordance with a level (a potential or a voltage) of the electrical signals or variation in level thereof. In contrast, mirror control signal 540 is a communication signal obtained by modulation of data indicating the position of irradiation.

In control system 1, adjustment of the position of the workpiece by XY stage 20 and adjustment of the position of irradiation by galvano mirror 40 should be synchronized. A method of transmission of command values, on the other hand, is different between stage control signal 520 and laser control signal 530, and mirror control signal 540.

The present embodiment provides solving means for realizing more accurate synchronization in spite of such a difference in method of transmission of the command values.

### <B. Exemplary Hardware Configuration of Control System 1>

An exemplary hardware configuration of control system 1 according to the present embodiment will now be described.

Fig. 2 is a schematic diagram showing an exemplary main hardware configuration of control system 1 according to the present embodiment. As described above, control device 10 includes main control unit 100, stage control unit 200, and laser control unit 300.

Main control unit 100 includes a processor 102, a main memory 104, a storage 106, and a bus controller 112 as main components.

Storage 106 is implemented by a solid state disk (SSD) or a flash memory, and for example, a system program 108 configured to provide a basic program execution environment and an application program 110 freely created in accordance with a purpose are stored therein.

Processor 102 is typically implemented by a central processing unit (CPU) or a micro-processing unit (MPU), and it implements overall control by control system 1 by reading system program 108 and application program 110 stored in storage 106 and developing the program on main memory 104 and executing the same.

Main control unit 100 is electrically connected to stage control unit 200 and laser control unit 300 through an internal bus 114. Bus controller 112 mediates data communication through internal bus 114.

Though an exemplary configuration in which necessary processing is provided by execution of a program by processor 102 is shown, a part or the entirety of this provided processing may be performed by dedicated hardware circuitry (for example, an application specific integrated circuit (ASIC) or a field-programmable gate array (FPGA)).

Stage control unit 200 generates and outputs stage control signal 520 to be provided to servo driver 23 and servo driver 25. More specifically, stage control unit 200 includes an axis control computing unit 210 and an output interface circuit 220.

Axis control computing unit 210 obtains the command value calculated by execution of application program 110 by main control unit 100 and generates data to be provided to servo driver 23 and servo driver 25. Axis control computing unit 210 is implemented, for example, by computing circuitry configured with a processor, an ASIC, an FPGA, or the like.

Axis control computing unit 210 includes a periodic signal generator 212. Periodic signal generator 212 generates a control period signal 510 indicating a synchronization reference between stage control unit 200 and laser control unit 300. For example, control period signal 510 is a signal alternating like pulses, and may include a pulse edge (rise or fall) as the synchronization reference.

Output interface circuit 220 corresponds to a signal output unit and outputs stage control signal 520 including the command value, in accordance with control period signal 510. More specifically, output interface circuit 220 generates stage control signal 520 to be provided to servo driver 23 and servo driver 25 in accordance with the data generated by axis control computing unit 210. Output interface circuit 220 outputs or updates stage control signal 520 at each timing determined based on the synchronization reference indicated by control period signal 510.

Stage control signal 520 may be an electrical signal obtained by modulation under pulse width modulation (PWM), of information on an amount of displacement, a speed, an angular velocity, or the like in each control period.

Axis control computing unit 210 and output interface circuit 220 may be implemented by a single ASIC or FPGA.

Laser control unit 300 generates and outputs laser control signal 530 to be provided to laser 30 and mirror control signal 540 to be provided to galvano mirror 40. More specifically, laser control unit 300 includes a laser control computing unit 310, an output interface circuit 314, and a communication interface circuit 316.

Laser control computing unit 310 obtains the command value calculated by execution of application program 110 by main control unit 100 and generates data to be provided to laser 30 and galvano mirror 40. Laser control computing unit 310 is implemented, for example, by computing circuitry configured with a processor, an ASIC, an FPGA, or the like.

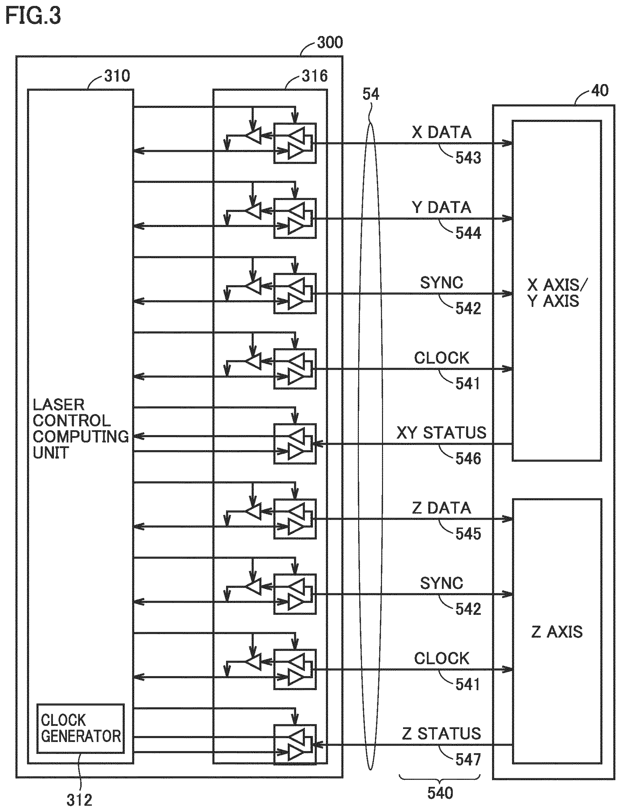

Laser control computing unit 310 generates laser control signal 530 and mirror control signal 540 in synchronization with control period signal 510 from stage control unit 200. Laser control computing unit 310 includes a clock generator 312 that generates a clock signal (a clock signal 541 shown in Fig. 3) to be used for communication with galvano mirror 40. As will be described later, clock generator 312 is able to adjust a period length of the clock signal.

Output interface circuit 314 outputs laser control signal 530 including the command value in accordance with control period signal 510. More specifically, output interface circuit 314 generates laser control signal 530 to be provided to laser 30 in accordance with the data generated by laser control computing unit 310. An electrical signal having two levels of on and off may be employed as laser control signal 530. Output interface circuit 314 outputs or updates laser control signal 530 at each timing determined based on the synchronization reference indicated by control period signal 510.

Communication interface circuit 316 corresponds to a communication unit, and outputs in accordance with control period signal 510, a frame including the command value in any communication scheme in which a clock signal is directly or indirectly used. More specifically, communication interface circuit 316 communicates with galvano mirror 40 to transmit a frame including the command value to galvano mirror 40. Communication interface circuit 316 starts transmission of the frame at each timing determined based on the synchronization reference indicated by control period signal 510.

For example, an XY2-100 protocol (a scheme in which a range of scanning angles is designated at accuracy of 16 bits), an SL2-100 protocol (a scheme in which a range of scanning angles is designated at accuracy of 20 bits), or the like can be employed for communication between communication interface circuit 316 and galvano mirror 40. Without being limited to such a communication protocol specific to the galvano mirror or a galvano scanner, any communication scheme in which the clock signal is directly or indirectly used is applicable.

Laser control computing unit 310, output interface circuit 314, and communication interface circuit 316 may be implemented by a single ASIC or FPGA.

### <C. Mirror Control Signal 540>

A configuration involved with transmission of mirror control signal 540 (frame) through communication line 54 will now be described.

Fig. 3 is a schematic diagram showing an exemplary hardware configuration involved with transmission of mirror control signal 540 in control system 1 according to the present embodiment. Fig. 3 shows an example in which the XY2-100 protocol is adopted as the protocol for transmission of mirror control signal 540. The XY2-100 protocol is categorized into clock synchronous serial communication in which the clock signal is directly used.

Referring to Fig. 3, in the example in which the XY2-100 protocol is adopted, mirror control signal 540 includes an X-axis scanning command angle 543 (X DATA), a Y-axis scanning command angle 544 (Y DATA), and a Z-axis scanning command angle 545 (Z DATA) as information to be transmitted from laser control unit 300 to galvano mirror 40. Mirror control signal 540 includes an XY-axis current value 546 (XY STATUS) and a Z-axis current value 547 (Z STATUS) as information to be transmitted from galvano mirror 40 to laser control unit 300.

Mirror control signal 540 further includes a clock signal 541 (CLOCK) and a synchronization signal 542 (SYNC).

Communication interface circuit 316 includes a driver circuit for transmission and reception of each signal.

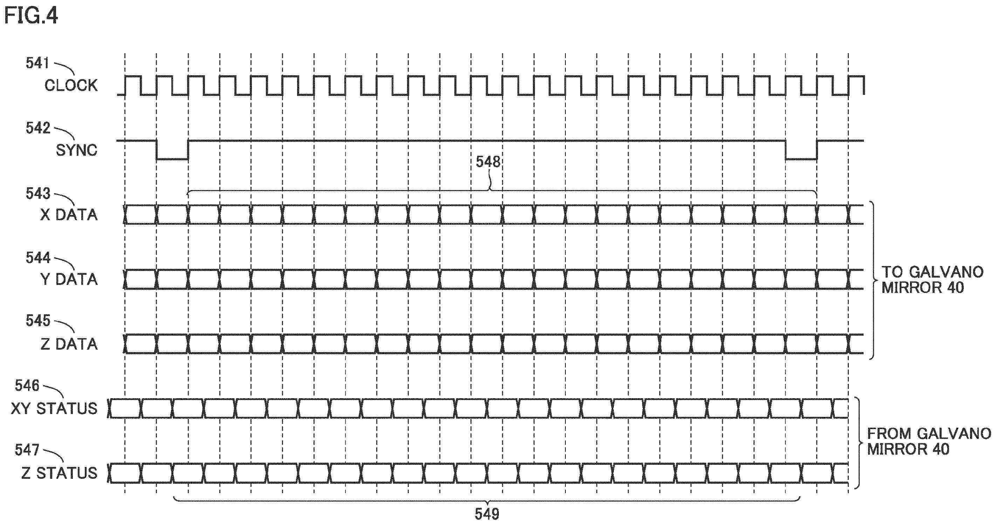

Fig. 4 is a time chart showing a specific example of mirror control signal 540 in control system 1 according to the present embodiment. Referring to Fig. 4, each bit included in a frame 548 is sequentially sent out in synchronization with clock signal 541, as each of the scanning command angles (X-axis scanning command angle 543, Y-axis scanning command angle 544, and Z-axis scanning command angle 545). Similarly, each bit included in a frame 549 is sequentially sent out in synchronization with clock signal 541, as each of the current values (XY-axis current value 546 and Z-axis current value 547).

Synchronization signal 542 indicates timing to send out the scanning command angle and the current value. In the example shown in Fig. 4, one frame is composed of twenty bits of each of the scanning command angle and the current value. The frame thus corresponds to a predetermined number of cycles of clock signal 541.

In the example shown in Fig. 4, one piece of information is transmitted in twenty cycles of clock signal 541. Since clock signal 541 is, for example, a pulsed signal at 2 MHz (one period is 500 ns), one frame is transmitted every 10 µs.

Communication interface circuit 316 of laser control unit 300 thus outputs mirror control signal 540, with the use of a frame corresponding to a predetermined number of cycles of clock signal 541.

### <D. Problem Involved with Synchronization and Solving Means>

A problem that may arise in the related art of the present embodiment and means for solving the problem will now be described.

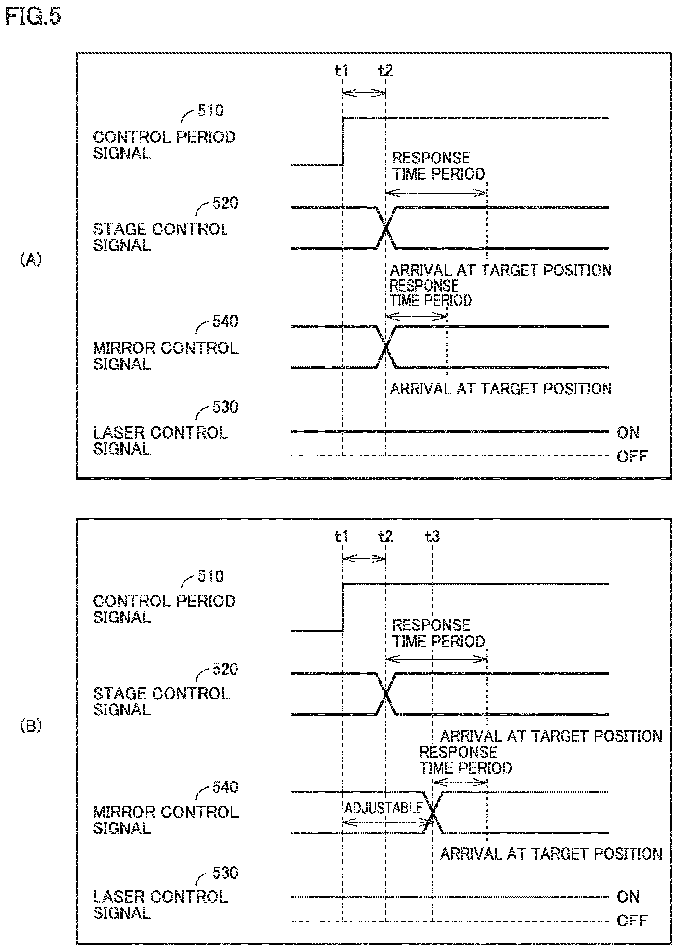

Fig. 5 is a schematic diagram for illustrating the problem that may arise in the related art of the present embodiment. Fig. 5 (A) shows an exemplary timing chart in the related art and Fig. 5 (B) shows an exemplary timing chart in the present embodiment.

Referring to Fig. 5 (A), control device 10 outputs or updates stage control signal 520 and mirror control signal 540 with the pulse edge (for example, rise) included in control period signal 510 being defined as the synchronization reference. Laser control signal 530 may also be outputted (or updated) with control period signal 510 being defined as the synchronization reference.

For example, after the pulse edge of control period signal 510 appears at time t1, at time t2, stage control signal 520 and mirror control signal 540 are outputted. Since the response time period of galvano mirror 40 is shorter than the response time period of XY stage 20, the position of irradiation by galvano mirror 40 reaches a target position first. In other words, when stage control signal 520 and mirror control signal 540 are outputted at the same timing, deviation between adjustment of the position of the workpiece by XY stage 20 and adjustment of the position of irradiation by galvano mirror 40 may occur.

Referring to Fig. 5 (B), in the present embodiment, at least timing of output of mirror control signal 540 with respect to the synchronization reference (pulse edge) indicated by control period signal 510 is adjustable. In the example shown in Fig. 5 (B), at time t2, stage control signal 520 is outputted, and at following time t3, mirror control signal 540 is outputted.

By adjustment of timing of output of mirror control signal 540 (that is, timing of transmission of the frame), timing of arrival of the position of the workpiece at the target position by XY stage 20 can match timing of arrival of the position of irradiation at the target position by galvano mirror 40.

The timing of output of mirror control signal 540 can be adjusted, for example, in a unit of the frame. In this case, a resolution in adjustment of the timing is a frame length (10 µs in the example described above). Though the resolution may be the frame length depending on the response time period of XY stage 20, the output timing is adjusted in a unit of the frame depending on the period length of the clock signal in the present embodiment. The period length of the clock signal is adjustable, for example, in a unit of 10 ns, which is set as the resolution in adjustment of the timing. In other words, by adjusting the period length of the clock signal, the resolution in adjustment of the timing can be improved by a factor of approximately one thousand (from the unit of 10 µs to the unit of 10 ns).

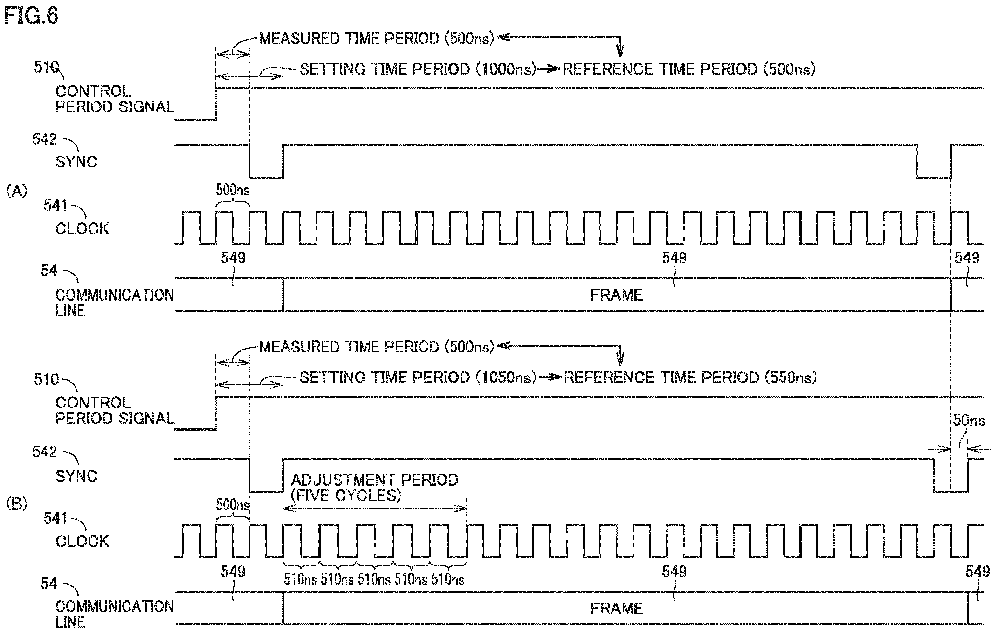

Fig. 6 is a diagram for illustrating processing for adjusting timing of output of mirror control signal 540 in control system 1 according to the present embodiment.

Fig. 6 (A) shows an example in which mirror control signal 540 is outputted 1000 ns after the synchronization reference (rise) indicated by control period signal 510. Fig. 6 (B) shows an example in which output of mirror control signal 540 is started 1050 ns after the synchronization reference (rise) indicated by control period signal 510. A time period from the synchronization reference indicated by control period signal 510 until start of output of mirror control signal 540 is referred to as a "setting time period" below. In other words, the setting time period means a time period from the synchronization reference indicated by control period signal 510 until start of transmission of the frame.

The period length of control period signal 510 and the period length (normal) of clock signal 540 are assumed to maintain relation of an integral multiple. In other words, the period length of control period signal 510 is set to an integral multiple of the period length of clock signal 541.

For example, the period length of control period signal 510 is assumed as 100 µs (=100,000 ns) and the period length (normal) of clock signal 541 is assumed as 500 ns. In this example, the period length of control period signal 510 is two hundred times as long as the period length (normal) of clock signal 541. Any period length of control period signal 510 can be set.

The period length of clock signal 541 is assumed as being adjustable to 490 ns and 510 ns, each of which is variation by 10 ns from 500 ns. The setting time period can also be set in a unit of 10 ns, depending on a length (10 ns) of an adjustment time period for this clock signal 541.

For example, a range of setting of the setting time period may be 0.5 µs to 9 µs and a unit of setting of the setting time period may be 10 to 20 ns.

In control system 1, a time period from the synchronization reference indicated by control period signal 510 until first fall of synchronization signal 542 is measured. This measured time period is referred to as a "measured time period" below. The measured time period corresponds to a time period calculated by subtracting the period length of one cycle of clock signal 541 from the time period from the synchronization reference indicated by control period signal 510 until start of transmission of the frame. In other words, the measured time period is an exemplary time period that indicates timing of start of transmission of the frame from the synchronization reference indicated by control period signal 510. A time period until first rise of synchronization signal 542 may be measured.

A time period from fall until rise of synchronization signal 542 corresponds to one cycle of clock signal 541. Therefore, the time period calculated by subtracting the period length (normal) of clock signal 541 from the setting time period should only be controlled to match the measured time period. A time period calculated by subtracting the period length (normal) of clock signal 541 from the setting time period is referred to as a "reference time period" below.

In the example shown in Fig. 6 (A), the setting time period is calculated as 1000 ns and the reference time period is calculated as 500 ns. As compared to this reference time period, the measured time period is 500 ns, and therefore the measured time period is the same as the reference time period. In other words, mirror control signal 540 is outputted at the timing as set.

In the example shown in Fig. 6 (B), on the other hand, the setting time period is calculated as 1050 ns and the reference time period is calculated as 550 ns. If the measured time period is 500 ns as compared to this reference time period, there is shortage of 50 ns as compared to the reference time period. In other words, the timing of output of mirror control signal 540 is earlier by 50 ns.

In order to delay the timing of output of mirror control signal 540 by 50 ns, the period length of clock signal 541 is adjusted. The period length of clock signal 541 is adjustable to 490 ns and 510 ns as described above. The period of clock signal 541 is then made longer for a predetermined number of cycles, in accordance with a length of time for delay.

In the example shown in Fig. 6 (B), the period length of clock signal 541 is adjusted to 510 ns only for five cycles (adjustment period). A phase of clock signal 541 is delayed by 50 ns owing to this adjustment period. Consequently, at least after next rise of synchronization signal 542, mirror control signal 540 is outputted at timing as set.

Control system 1 thus assesses deviation of the timing of output of mirror control signal 540 at each synchronization reference indicated by control period signal 510, and when it determines necessity of adjustment, it adjusts the period length of clock signal 541 in accordance with magnitude of deviation.

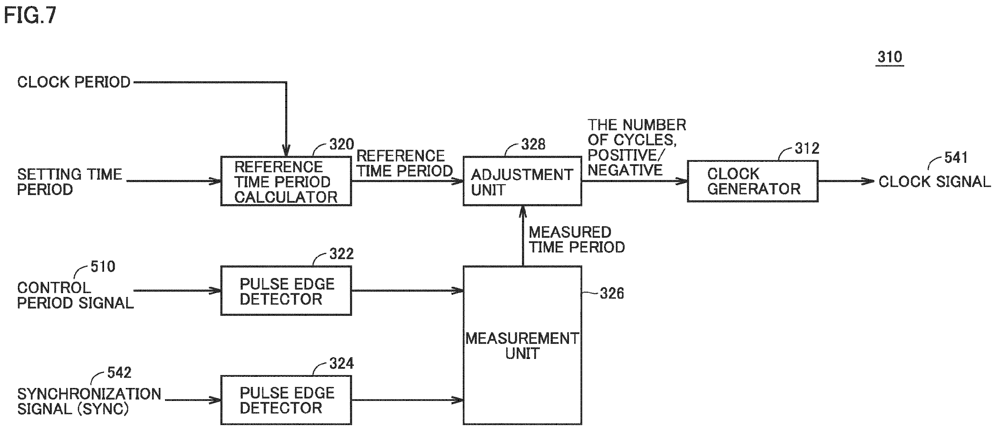

Fig. 7 is a schematic diagram showing a functional configuration in laser control unit 300 of control system 1 according to the present embodiment. Referring to Fig. 7, laser control unit 300 includes a reference time period calculator 320, pulse edge detectors 322 and 324, a measurement unit 326, and an adjustment unit 328 in addition to clock generator 312.

Reference time period calculator 320 calculates the reference time period based on the setting time period and the period length (normal) of clock signal 541. More specifically, reference time period calculator 320 calculates the reference time period by subtracting the period length (normal) of clock signal 541 from the setting time period.

Pulse edge detector 322 detects the pulse edge (rise) included in control period signal 510.

Pulse edge detector 324 detects the pulse edge (fall) included in synchronization signal 542.

Measurement unit 326 outputs the measured time period as an exemplary time period that indicates timing of start of transmission of the frame from the synchronization reference indicated by control period signal 510. Measurement unit 326 measures the time period based on control period signal 510 and synchronization signal 542 alternating at every predetermined period of clock signal 541. More specifically, measurement unit 326 measures a time period from detection of rise of control period signal 510 by pulse edge detector 322 until detection of fall of synchronization signal 542 by pulse edge detector 324.

Adjustment unit 328 adjusts the period length of at least a part of clock signal 541 based on the time period (measured time period) measured by measurement unit 326. Adjustment unit 328 determines the number of cycles for which the period length of clock signal 541 is to be adjusted such that the measured time period is the equal to the predetermined reference time period.

More specifically, adjustment unit 328 determines the number of cycles to be included in the adjustment period and a direction of adjustment based on a difference between the reference time period and the measured time period. For example, a direction in which the period length of clock signal 541 is made longer can be defined as "positive" and a direction in which the period length of clock signal 541 is made shorter can be defined as "negative". Adjustment unit 328 thus determines the direction of adjustment of the period length of clock signal 541 based on relation of magnitude between the measured time period measured by measurement unit 326 and the reference time period.

With this approach being applied to the example shown in Fig. 6 (B), adjustment unit 328 determines to adjust clock signal 541 in the "positive" direction only for five cycles.

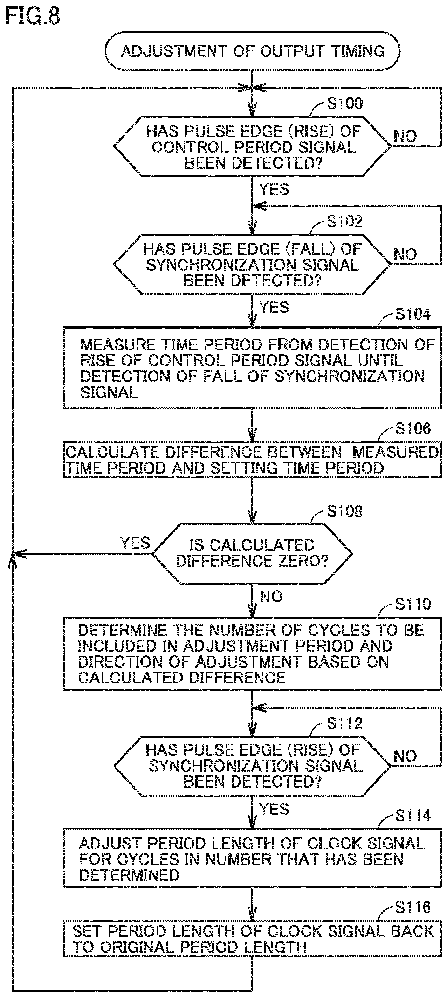

Fig. 8 is a flowchart showing a procedure of processing for adjusting timing of output of mirror control signal 540 in control system 1 according to the present embodiment. Each step shown in Fig. 8 is typically performed by laser control computing unit 310 of laser control unit 300.

Referring to Fig. 8, laser control unit 300 determines whether or not it has detected the pulse edge (rise) of control period signal 510 (step S100). When the pulse edge of control period signal 510 has not been detected (NO in step S100), processing in step S100 is repeated.

When the pulse edge of control period signal 510 has been detected (YES in step S100), laser control unit 300 determines whether or not it has detected the pulse edge (fall) of synchronization signal 542 (step S102). When the pulse edge of synchronization signal 542 has not been detected (NO in step S102), processing in step S102 is repeated.

When the pulse edge of synchronization signal 542 has been detected (YES in step S102), laser control unit 300 measures the time period from detection of rise of control period signal 510 until detection of fall of synchronization signal 542 (step S104).

Laser control unit 300 thus measures the time period (measured time period) indicating timing of start of transmission of the frame from the synchronization reference indicated by control period signal 510.

Laser control unit 300 calculates a difference between the measured time period and the setting time period (step S106). Laser control unit 300 then determines whether or not the calculated difference is zero (step S108).

When the calculated difference is not zero (NO in step S108), laser control unit 300 determines the number of cycles to be included in the adjustment period and the direction of adjustment based on the calculated difference (step S110). Laser control unit 300 then determines whether or not it has detected the pulse edge (rise) of synchronization signal 542 (step S112). When the pulse edge of synchronization signal 542 has not been detected (NO in step S112), processing in step S112 is repeated.

When the pulse edge of synchronization signal 542 has been detected (YES in step S112), laser control unit 300 adjusts the period length of clock signal 541 for cycles in number that has been determined (step S114). In succession, laser control unit 300 sets the period length of clock signal 541 back to an original period length (step S116).

Laser control unit 300 thus adjusts the period length of at least a part of clock signal 541 based on the measured time period.

Processing in step S100 or later is then repeated.

When the calculated difference is zero (YES in step S108), processing thereafter is skipped and processing in step S100 or later is repeated.

### <E. Exemplary Operation>

An exemplary operation in control system 1 will now be described.

### (e1: Influence by Jitter)

Jitter may occur within the period length of control period signal 510. For example, jitter that occurs in control period signal 510 is several hundred parts per million (ppm) of the period length of control period signal 510 and circuit jitter that occurs in a circuit that transmits and receives control period signal 510 is approximately several ten nanoseconds.

Even when jitter occurs within the period length of control period signal 510 in control system 1, deviation of timing of output of mirror control signal 540 can be adjusted.

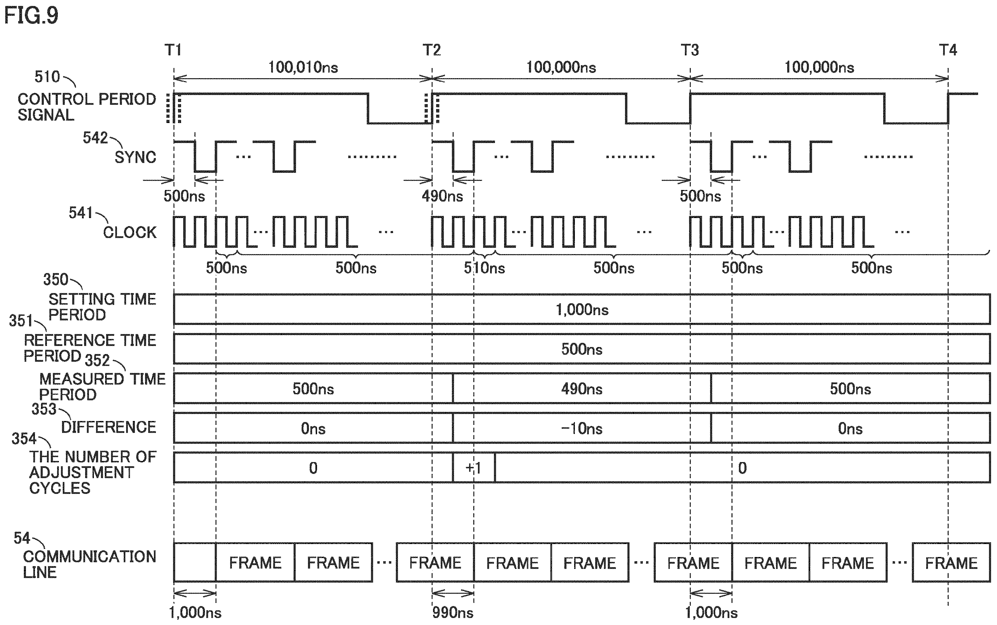

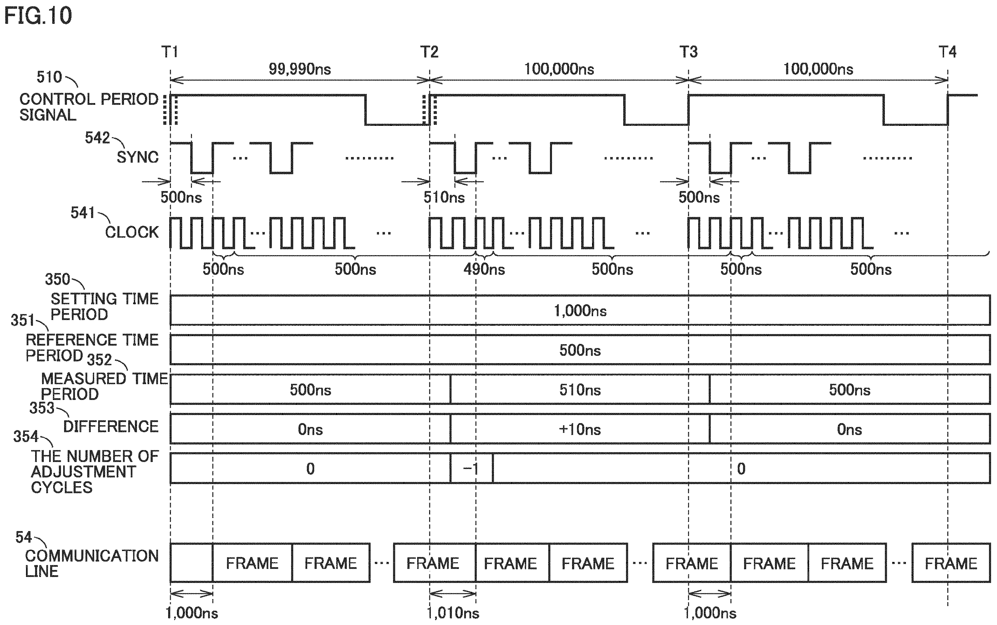

Figs. 9 and 10 are each a diagram for illustrating an exemplary operation for absorbing influence by jitter in control system 1 according to the present embodiment. Fig. 9 shows an exemplary operation when the period length of control period signal 510 becomes longer and Fig. 10 shows an exemplary operation when the period length of control period signal 510 becomes shorter.

Referring to Fig. 9, a length of time between time T1 and time T2 each of which is timing of rise of control period signal 510 is assumed to have become longer by 10 ns due to jitter. Consequently, a time period (a measured time period 352) from rise of control period signal 510 at time T2 until fall of synchronization signal 542 is 490 ns. When a setting time period 350 is 1000 ns and a reference time period 351 is 500 ns, a difference 353 (measured time period 352 - reference time period 351) is calculated as -10 ns, which means that timing is earlier by 10 ns as compared with reference time period 351.

In order to eliminate this difference 353, during the adjustment period, clock signal 541 made longer in period length is generated for one cycle. The number of cycles to be generated during the adjustment period corresponds to the number of adjustment cycles 354. At this time, the number of adjustment cycles 354 is set to one.

Specifically, the period length of clock signal 541 immediately after rise of synchronization signal 542 is set to 510 ns. The period length of following clock signal 541 is set back to normal 500 ns.

Referring to Fig. 10, the length of time between time T1 and time T2 each of which is the timing of rise of control period signal 510 is assumed to have become shorter by 10 ns due to jitter. Consequently, the time period (measured time period 352) from rise of control period signal 510 at time T2 until fall of synchronization signal 542 is 510 ns. When setting time period 350 is 1000 ns and reference time period 351 is 500 ns, difference 353 (measured time period 352 - reference time period 351) is calculated as + 10 ns, which means that timing is delayed by 10 ns as compared with reference time period 351.

In order to eliminate this difference 353, during the adjustment period, clock signal 541 made shorter in period length is generated for one cycle. At this time, the number of adjustment cycles 354 is set to one.

Specifically, the period length of clock signal 541 immediately after rise of synchronization signal 542 is set to 490 ns. The period length of following clock signal 541 is set back to normal 500 ns.

The period length of clock signal 541 immediately after rise of synchronization signal 542 is thus adjusted depending on difference 353. When difference 353 (measured time period 352 - reference time period 351) has a negative value, the period length of synchronization signal 542 is adjusted by +10 ns, and when difference 353 has a positive value, the period length of synchronization signal 542 is adjusted by -10 ns. The number of cycles for which the period length is adjusted is determined depending on magnitude of difference 353.

### (e2: Change of Setting Time Period)

An exemplary operation when the setting time period is changed while mirror control signal 540 is being outputted will now be described.

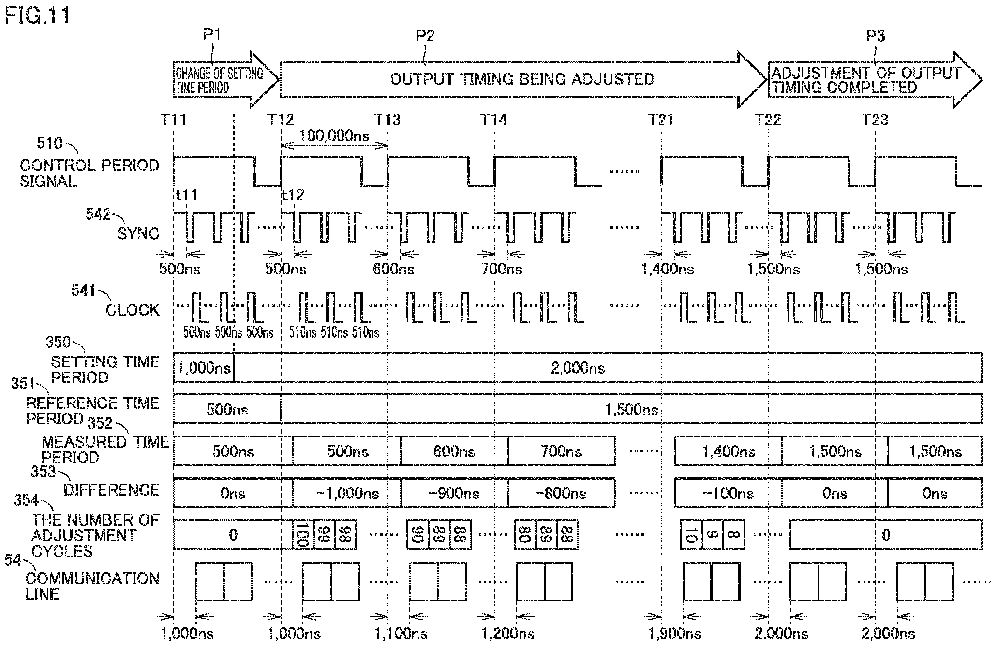

Fig. 11 is a diagram for illustrating an exemplary operation at the time of change of the setting time period in control system 1 according to the present embodiment. Fig. 11 shows an exemplary operation when setting time period 350 is changed from 1000 ns to 2000 ns during a time period from time T11 to time T12.

Referring to Fig. 11, a time period (measured time period 352) from rise of control period signal 510 at time T11 until fall of synchronization signal 542 at time t11 is 500 ns and reference time period 351 is 500 ns. Therefore, difference 353 is zero. Consequently, during the time period from time T11 to time T12, the period length of clock signal 541 is maintained at normal 500 ns.

When setting time period 350 is changed from 1000 ns to 2000 ns during the time period from time T11 to time T12 (a section P1), at time T12, reference time period 351 is changed to 1500 ns. Since the time period (measured time period 352) from rise of control period signal 510 at time T12 until fall of synchronization signal 542 at time 112 is 500 ns, difference 353 (measured time period 352 - reference time period 351) is calculated as -1000 ns. In order to eliminate this difference 353, determination as necessity for one hundred cycles of clock signal 541 made longer in period length is made. At this time, the number of adjustment cycles 354 is set to one hundred.

Then, as synchronization signal 542 rises immediately after time t12, clock signals 541 having the period length of 510 ns are successively generated. In one cycle of control period signal 510, an upper limit value of the number of cycles of clock signal 541 the period length of which is to be changed may be set. In the example shown in Fig. 11, ten cycles are assumed as being set as the upper limit. In other words, synchronization performance in one cycle of control period signal 510 is 100 ns. Therefore, when clock signal 541 the period length of which has been changed to 510 ns is generated for ten cycles after rise of synchronization signal 542, the period length of clock signal 541 is set back to normal 500 ns.

Consequently, the output timing is adjusted by 10 ns × 10 cycles = 100 ns in a time period from time T12 to time T13.

In succession, since the time period (measured time period 352) from rise of control period signal 510 at time T13 until fall of synchronization signal 542 at time t13 is 600 ns (delayed by 100 ns as compared with 500 ns), difference 353 is -900 ns. In order to eliminate this difference 353, the number of adjustment cycles 354 is set to ninety.

Similarly to the section from time T11 to time T12, when clock signal 541 the period length of which has been changed to 510 ns is generated for ten cycles after rise of synchronization signal 542, the period length of clock signal 541 is set back to normal 500 ns.

Similarly thereafter, the timing of output of mirror control signal 540 is adjusted by 100 ns every one period of control period signal 510. Consequently, the timing of output of mirror control signal 540 is adjusted to 2000 ns that has been set, with ten cycles (a section P2) of control period signal 510 being spent.

Thereafter, the period length of clock signal 541 is maintained at normal 500 ns (a section P3).

In the example shown in Fig. 11, the upper limit value for clock signal 541 the period length of which is adjustable can freely be set. The upper limit value for clock signal 541 the period length of which is adjustable does not necessarily have to be provided.

### (e3: Summary)

In control system 1, while the number of clock signals 541 to be generated in each cycle of control period signal 510 remains the same so as not to affect frame transmission in synchronization with clock signal 541, the period length of clock signal 541 is gradually adjusted. Consequently, the phase of clock signal 541 with respect to control period signal 510 is adjusted. By adjustment of the phase, the timing of output of mirror control signal 540 can freely be adjusted at a high resolution.

### <F. User Interface>

An exemplary user interface provided by control system 1 will now be described. The user typically inputs setting for performing the processing as described above through operation display device 400 connected to control device 10.

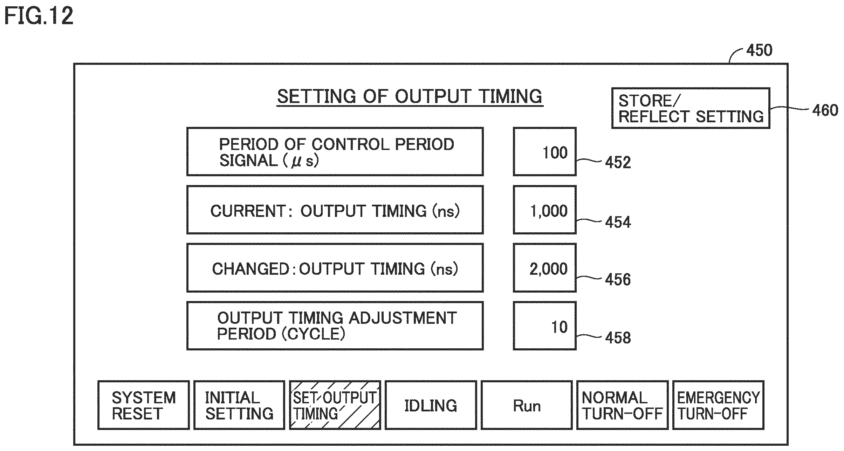

Fig. 12 is a schematic diagram showing an exemplary user interface screen 450 shown on operation display device 400 of control system 1 according to the present embodiment. Fig. 12 shows an exemplary user interface screen used in adjustment of the timing of output of mirror control signal 540.

Referring to Fig. 12, user interface screen 450 accepts setting necessary for the processing as described above.

User interface screen 450 includes an input portion 452 where setting of the period length of control period signal 510 is accepted, a display portion 454 where current output timing is shown, an input portion 456 where setting of changed output timing is accepted, a display portion 458 where the adjustment period necessary for change of the output timing is shown, and a setting reflection button 460.

The user inputs the period length of control period signal 510 in advance into input portion 452. Operation display device 400 shows in display portion 454, the currently set output timing.

When the user desires to change the currently set output timing, the user inputs changed output timing into input portion 456.

Operation display device 400 calculates a period necessary for adjustment of the output timing based on the set period length of control period signal 510, the current output timing, the changed output timing, synchronization performance, and the like.

More specifically, operation display device 400 calculates the number of cycles of the clock signal necessary for adjustment of the output timing, based on time of change of the output timing and a length of time (synchronization performance) that can be adjusted in one cycle of control period signal 510. A ratio of margin (margin) may be set in advance For example, when the margin is set to two, the number of cycles twice as many as the calculated number of cycles is determined as a necessary period.

When the user finally selects setting reflection button 460, shown setting contents are transmitted to control device 10.

The user adjusts the timing of output of mirror control signal 540 while the user watches a result of laser processing onto workpiece 4 or the like on user interface screen 450 as described above.

### <G. Other Embodiments>

Though the example in which the XY2-100 protocol is adopted is mainly described above, the present solving means is applicable to a communication scheme in which a clock signal is indirectly used.

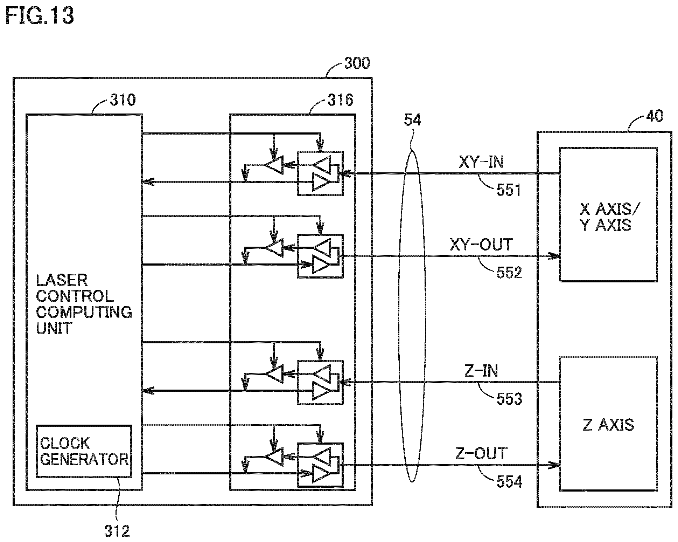

Fig. 13 is a schematic diagram showing another exemplary hardware configuration involved with transmission of mirror control signal 540 in control system 1 according to the present embodiment. Fig. 13 shows an example in which an SL2-100 protocol is adopted as the protocol for transmission of mirror control signal 540. The SL2-100 protocol is categorized into clock asynchronous serial communication in which the clock signal is indirectly used.

Referring to Fig. 13, in the example where the SL2-100 protocol is adopted, mirror control signal 540 includes input data 551 (XY-IN) associated with an X axis and a Y axis, output data 552 (XY-OUT) associated with the X axis and the Y axis, input data 553 (Z-IN) associated with a Z axis, and output data 554 (Z-OUT) associated with the Z axis, as information to be transmitted from laser control unit 300 to galvano mirror 40.

Mirror control signal 540 does not include the clock signal (CLOCK) and the synchronization signal (SYNC).

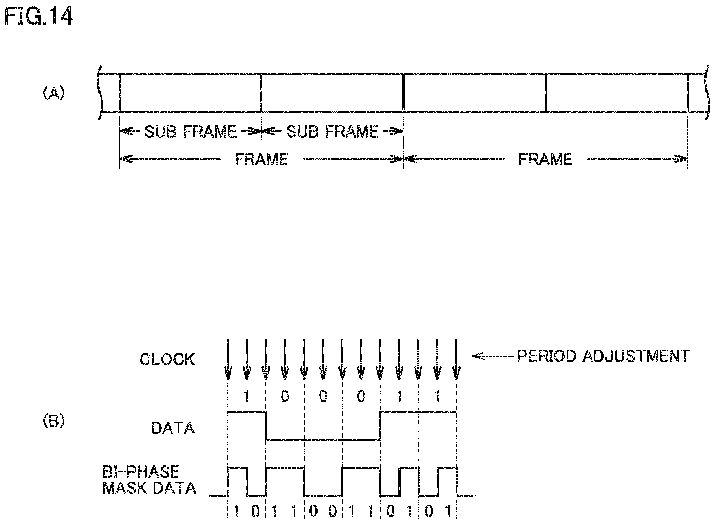

Fig. 14 is a diagram for illustrating a method of generating mirror control signal 540 shown in Fig. 13. As shown in Fig. 14 (A), mirror control signal 540 is composed of frames that are temporally successive. A predetermined number (for example, 192) of frames constitute one channel status block. Each of the frames includes two sub frames. Each sub frame includes a preamble at the top.

As shown in Fig. 14 (B), the mirror control signal is composed of bi-phase mask data generated by modulation of binary data with a clock signal. The period length of the clock signal for generation of the bi-phase mask data is adjusted with the method as described above. Specifically, a length of each frame or each sub frame becomes longer as a result of adjustment of the period length of the clock signal so that synchronization with control period signal 510 can be achieved.

Thus, even in the communication scheme in which the clock signal is indirectly used, synchronization between control period signal 510 and mirror control signal 540 can be maintained.

### <H. Additional Aspects>

The present embodiment as described above encompasses technical concepts as below.

### [Configuration 1]

A control system includes
a computing unit (100) that executes an application program (110) to calculate a first command value and a second command value,
a signal output unit (200; 220) that outputs a control signal (520) including the first command value in accordance with a control period signal (510) indicating a synchronization reference,
a communication unit (300; 316) that transmits in accordance with the control period signal, a frame (540) including the second command value in a communication scheme in which a clock signal (541) is directly or indirectly used,
a measurement unit (322, 324, 326) that measures a time period that indicates timing of start of transmission of the frame, from the synchronization reference indicated by the control period signal, and
an adjustment unit (328) that adjusts a period length of at least a part of the clock signal based on the measured time period.

### [Configuration 2]

In the control system according to Configuration 1,
the measurement unit measures the time period based on the control period signal and a synchronization signal alternating at every predetermined period of the clock signal.

### [Configuration 3]

In the control system according to Configuration 2,
the measurement unit includes
a first detector (322) that detects a pulse edge included in the control period signal, and
a second detector (324) that detects a pulse edge included in the synchronization signal.

### [Configuration 4]

In the control system according to any one of Configurations 1 to 3,
the adjustment unit determines the number of cycles for which the period length of the clock signal is to be adjusted such that the measured time period matches a predetermined reference time period.

### [Configuration 5]

In the control system according to Configuration 4,
the adjustment unit determines a direction of adjustment of the period length of the clock signal, based on relation of magnitude between the measured time period and the reference time period.

### [Configuration 6]

In the control system according to any one of Configurations 1 to 5,
in one cycle of the control period signal, an upper limit value of the number of cycles of the clock signal the period length of which is to be adjusted is predetermined.

### [Configuration 7]

In the control system according to any one of Configurations 1 to 6,
the frame corresponds to a predetermined number of cycles of the clock signal.

### [Configuration 8]

A communication apparatus (300) is connected to a computing unit (100) that executes an application program (110) to calculate a first command value and a second command value and a control unit (200) that outputs a control signal (520) including the first command value in accordance with a control period signal (510) indicating a synchronization reference, and the communication apparatus includes
a communication unit (316) that transmits in accordance with the control period signal, a frame (540) including the second command value in a communication scheme in which a clock signal is directly or indirectly used,
a measurement unit (322, 324, 326) that measures a time period that indicates timing of start of transmission of the frame, from the synchronization reference indicated by the control period signal, and
an adjustment unit (328) that adjusts a period length of at least a part of the clock signal based on the measured time period.

### [Configuration 9]

A control method includes
executing an application program (110) to calculate a first command value and a second command value (100),
outputting a control signal (520) including the first command value in accordance with a control period signal (510) indicating a synchronization reference (200),
transmitting in accordance with the control period signal, a frame (540) including the second command value in a communication scheme in which a clock signal is directly or indirectly used, (316),
measuring a time period that indicates timing of start of transmission of the frame, from the synchronization reference indicated by the control period signal (S100 to S104), and
adjusting a period length of at least a part of the clock signal based on the measured time period (S110 to S116).

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 control system; 4 workpiece; 10 control device; 20 XY stage; 22 plate; 23, 25 servo driver; 24, 26 servo motor; 30 laser; 40 galvano mirror; 42 X-axis scanner motor; 43 X-axis scanner mirror; 44 Y-axis scanner motor; 45 Y-axis scanner mirror; 46 Z-axis scanner motor; 47 lens; 52, 53 control line; 54 communication line; 100 main control unit; 102 processor; 104 main memory; 106 storage; 108 system program; 110 application program; 112 bus controller; 114 internal bus; 200 stage control unit; 210 axis control computing unit; 212 periodic signal generator; 326 measurement unit; 220, 314 output interface circuit; 300 laser control unit; 310 laser control computing unit; 312 clock generator; 316 communication interface circuit; 320 reference time period calculator; 322, 324 pulse edge detector; 328 adjustment unit; 350 setting time period; 351 reference time period; 352 measured time period; 353 difference; 354 the number of adjustment cycles; 400 operation display device; 450 user interface screen; 452, 456 input portion; 454, 458 display portion; 460 setting reflection button; 510 control period signal; 520 stage control signal; 530 laser control signal; 540 mirror control signal; 542 synchronization signal; 543 X-axis scanning command angle; 544 Y-axis scanning command angle; 545 Z-axis scanning command angle; 546 XY-axis current value; 547 Z-axis current value; 548, 549 frame; 551, 553 input data; 552, 554 output data; P1, P2, P3 section.

## Claims

1. A control system comprising:
a computing unit configured to execute an application program to calculate a first command value and a second command value;
a signal output unit configured to output a control signal including the first command value in accordance with a control period signal indicating a synchronization reference;
a communication unit configured to transmit in accordance with the control period signal, a frame including the second command value in a communication scheme in which a clock signal is directly or indirectly used;
a measurement unit configured to measure a time period that indicates timing of start of transmission of the frame, from the synchronization reference indicated by the control period signal; and
an adjustment unit configured to adjust a period length of at least a part of the clock signal based on the measured time period.

2. The control system according to claim 1, wherein
the measurement unit is configured to measure the time period based on the control period signal and a synchronization signal alternating at every predetermined period of the clock signal.

3. The control system according to claim 2, wherein
the measurement unit comprises
a first detector configured to detect a pulse edge included in the control period signal, and
a second detector configured to detect a pulse edge included in the synchronization signal.

4. The control system according to any one of claims 1 to 3, wherein
the adjustment unit is configured to determine the number of cycles for which the period length of the clock signal is to be adjusted such that the measured time period matches a predetermined reference time period.

5. The control system according to claim 4, wherein
the adjustment unit is configured to determine a direction of adjustment of the period length of the clock signal, based on relation of magnitude between the measured time period and the reference time period.

6. The control system according to any one of claims 1 to 5, wherein
in one cycle of the control period signal, an upper limit value of the number of cycles of the clock signal the period length of which is to be adjusted is predetermined.

7. The control system according to any one of claims 1 to 6, wherein
the frame corresponds to a predetermined number of cycles of the clock signal.

8. A communication apparatus connected to a computing unit configured to execute an application program to calculate a first command value and a second command value and a control unit configured to output a control signal including the first command value in accordance with a control period signal that indicates a synchronization reference, the communication apparatus comprising:
a communication unit configured to transmit in accordance with the control period signal, a frame including the second command value in a communication scheme in which a clock signal is directly or indirectly used;
a measurement unit configured to measure a time period that indicates timing of start of transmission of the frame, from the synchronization reference indicated by the control period signal; and
an adjustment unit configured to adjust a period length of at least a part of the clock signal based on the measured time period.

9. A control method comprising:
executing an application program to calculate a first command value and a second command value;
outputting a control signal including the first command value in accordance with a control period signal that indicates a synchronization reference;
transmitting in accordance with the control period signal, a frame including the second command value in a communication scheme in which a clock signal is directly or indirectly used;
measuring a time period that indicates timing of start of transmission of the frame, from the synchronization reference indicated by the control period signal; and
adjusting a period length of at least a part of the clock signal based on the measured time period.
